# EUROPEAN PATENT APPLICATION

(11) **EP 0 753 825 A1**
(43) Date of publication of application: **15.01.1997**
(21) Application number: 96305189.1
(22) Date of filing: 15.07.1996
(51) Int. Cl.: G06K 11/14

(54) **Ultrasonic pointing type wireless controller**

(30) Priority: 13.07.1995 KR 9520670
(71) Applicant: LG ELECTRONICS INC., Seoul (KR)
(72) Inventor: Kim, Jeong-Yeol, Suwon-si, Kyungki-do (KR)
(74) Representative: Cross, Rupert Edward Blount

(57) **Abstract**

Ultrasonic pointing type wireless controller is disclosed, including transmitting means having a plurality of ultrasonic wave emitting sensors each arranged in a predetermined angle from an axis for emitting an ultrasonic signal of a fixed frequency into air; receiving means having a plurality of ultrasonic wave receiving sensors each attached on a display orthogonal to the ultrasonic wave emitting sensors in the transmitting means for receiving the ultrasonic signals emitted from the transmitting means; and, controlling means for calculating coordinates of a pointed position from a relative phase difference of the ultrasonic signals received at the receiving means and matching the pointed position on a screen of the display.

## Description

### BACKGROUND OF THE INVENTION

### Field of the Invention

The present invention relates to a wireless controller, and more particularly, to an ultrasonic pointing type wireless controller, in which ultrasonic wave transmitting means for generating an ultrasonic wave and ultrasonic wave receiving means for receiving the ultrasonic wave transmitted through the air are arranged orthogonal to the other for using a relative difference of phases of the ultrasonic waves occurred in this case in calculating coordinates and controlling a position of a cursor for ease of short distance control.

### Discussion of Related Art

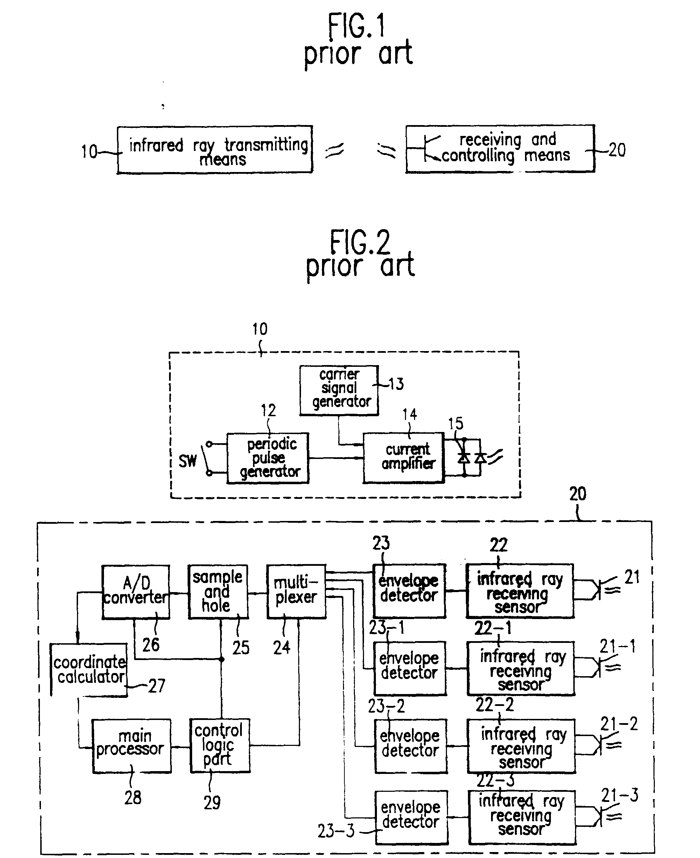

Shown in Figs. 1 ∼ 3 are a conventional infrared pointing type wireless controllers, disclosed by the same inventor in Korea under the same title with this application, with an application No. 92-12672.

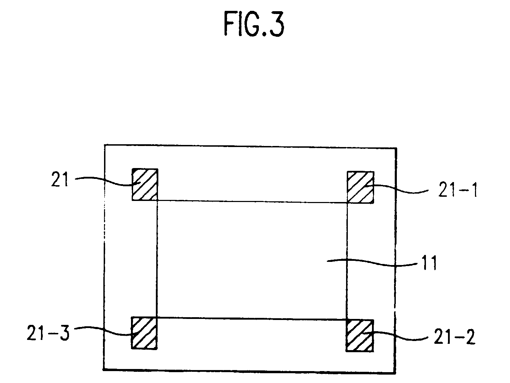

Fig. 1 schematically illustrates the conventional infrared pointing type wireless controller, Fig. 2 illustrates a detail of the controller shown in Fig. 1, and Fig. 3 illustrates infrared sensors 21 ∼ 21-3 on four corners of a display screen 11.

That is, the conventional infrared pointing type wireless controller includes an infrared ray transmitting means 10 for transmitting infrared signals of a certain frequency, and a receiving/controlling means 20 for receiving the transmitted signals through receiving sensors 21 to 21-3 arranged at different positions on the display screen, calculating coordinates of a pointed position according to difference of intensities of the infrared signals received through each of the receiving sensors 21 to 21-3, and matching the pointed position to the display screen 11.

The infrared ray transmitting means 10 includes a periodic pulse generator 12 for generating periodic pulses by turning on/off the switch SW, a carrier signal generator 13 for generating a carrier signal, a current amplifier 14 for overlap-amplifying the periodic pulses generated in the periodic pulse generating part 12 and the carrier signal generated in the carrier signal generating part 13, infrared-emitting diodes 15 each for emitting the signal amplified in the current amplifier 14 into air.

The receiving/controlling means 20 includes infrared ray receiving sensors 21 to 21-3 each arranged on the monitor screen for receiving the signal transmitted from the infrared ray transmitting means 10, amplifiers 22 to 22-3 each for amplifying the weak infrared signals from the infrared ray receiving sensors 21 to 21-3 again, envelope detectors 23 to 23-3 each for removing the carrier signal received in the amplifiers 22 to 22-3, and sensing a level of the light intensity received in the infrared ray receiving sensors 21 to 21-3, a multiplexer 24, a sample-and-hold 25 and an analog-to-digital converter 26 connected in series for conversion of each of the levels of the light intensity from the envelope detectors 23 to 23-3 to a digital data, a coordinate calculator 27 for receiving an output from the analog-to-digital converter 26 for.calculating coordinates of the position on the display screen 11 pointed at the present time, a main processor 28 for matching the display screen 11 to the calculated coordinate axes for displaying the present pointed point on the display screen 11, and a control-logic part 29 for providing timings required for driving to different parts.

In the conventional infrared pointing type wireless controller having the aforementioned system shown in Figs. 1 ∼ 3, upon shooting an infrared signal toward any position on the display screen having the infrared receiving sensors 21 to 21-3 mounted at four positions thereof by using the infrared transmitting means 10, for example the handset remote controller, a light intensity received at each of the infrared receiving sensors 21 to 21-3 will be different.

That is, when the switch SW on the infrared ray transmitting means 10 is turned on, the periodic pulse generator 12 generates periodic pulses until the switch SW is turned off, and the periodic pulses are overlapped in the carrier signal generator 13 and applied to the current amplifier 14.

The current amplifier 14 amplifies current required for emitting the periodic pulses and the carrier signal into air, and an amplified signal is emitted into air by the infrared ray diodes 15.

The infrared signal transmitted into air is sensed by each of the infrared ray receiving sensors 21 to 21-3 in the receiving/controlling means 20, and the infrared signal, weakened in the course of receiving, are amplified again by the amplifiers 22 to 22-3.

The re-amplified infrared signals have the carrier signals removed by each of the envelope detectors 23 - 23-3, and are produced into levels of the infrared ray intensities of the infrared signals received at each of the infrared receiving sensors 21 to 21-3.

Accordingly, each of the levels of the infrared ray intensities is converted successively to digital data through the multiplexer 24, sample-and-hold 25 and analog-to-digital converter 26, which are then calculated into a coordinate position on the display screen 11 pointed at the present time by the coordinate calculator 27.

The coordinates calculated in the coordinate calculator 27 is entered into the main processor 28 for matching the display screen 11 and the calculated coordinates, and displaying the present point on the screen.

However, in case of the conventional wireless controller, since the receiving sensors should be attached on the four corners of the display screen, the attachment of the receiving sensors is not simple, and, because of the use of a medium of infrared ray, though the operation of the wireless controller is easy at a long distance in which the transmitting means and the receiving means are relatively far away, the operation of the controller is not easy relatively at a short distance in which they are a short distance away.

### SUMMARY OF THE INVENTION

Accordingly, the present invention is directed to an ultrasonic pointing type wireless controller that substantially obviates one or more of the problems due to limitations and disadvantages of the related art.

Preferred embodiments of the present invention provide an ultrasonic pointing type wireless controller, in which ultrasonic wave transmitting means for generating an ultrasonic wave and ultrasonic wave receiving means for receiving the ultrasonic wave transmitted through the air are arranged at a right angle to the other for using a relative difference of phases of the ultrasonic wave occurred in this case depending on their directions in calculating coordinates and controlling a position of a cursor for ease of the attachment of the receiving sensor and ease of short distance as well as long distance control.

Additional features and advantages will be set forth in the description which follows, and in part will be apparent from the description, or may be learned by practice of the invention. The objectives and other advantages will be realized and attained by the structure particularly pointed out in the written description and claims hereof as well as the appended drawings.

To achieve these and other advantages and in accordance with one particular preferred embodiment of the present invention, the ultrasonic pointing type wireless controller includes transmitting means having a plurality of ultrasonic wave emitting sensors each arranged in a predetermined angle from an axis for emitting an ultrasonic signal of a fixed frequency into air, receiving means having a plurality of ultrasonic wave receiving sensors each attached on a display orthogonal to the ultrasonic wave emitting sensors in the transmitting means for receiving the ultrasonic signals emitted from the transmitting means, and controlling means for calculating coordinates of a pointed position from a relative phase difference of the ultrasonic signals received at the receiving means and matching the pointed position on a screen of the display.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the drawings:

In the drawings:
Fig. 1 illustrates a simple block diagram of a conventional infrared pointing type wireless controller;
Fig. 2 illustrates a detail block diagram of Fig. 1;
Fig. 3 illustrates an conventional arrangement of infrared ray receiving sensors on a monitor screen;
Fig. 4 illustrates a perspective view of an arrangement of an ultrasonic pointing type wireless controller in accordance with one embodiment of the present invention;
Figs. 5a and 5b illustrate front and side views respectively of an arrangement of ultrasonic wave transmitting sensors in accordance with an embodiment of the present invention;
Figs. 6a and 6b illustrate plane and side views of a beam distribution of the ultrasonic wave transmitting sensors in accordance with an embodiment of the present invention;
Fig. 7 illustrates a block diagram of an ultrasonic wave pointing type wireless controller embodying the present invention;
Figs. 8a to 8e illustrate waveforms at different parts of the wireless controller embodying the present invention;
Fig. 9 illustrates an arrangement of ultrasonic wave receiving sensors on a display screen in accordance with a second embodiment of the present invention; and,

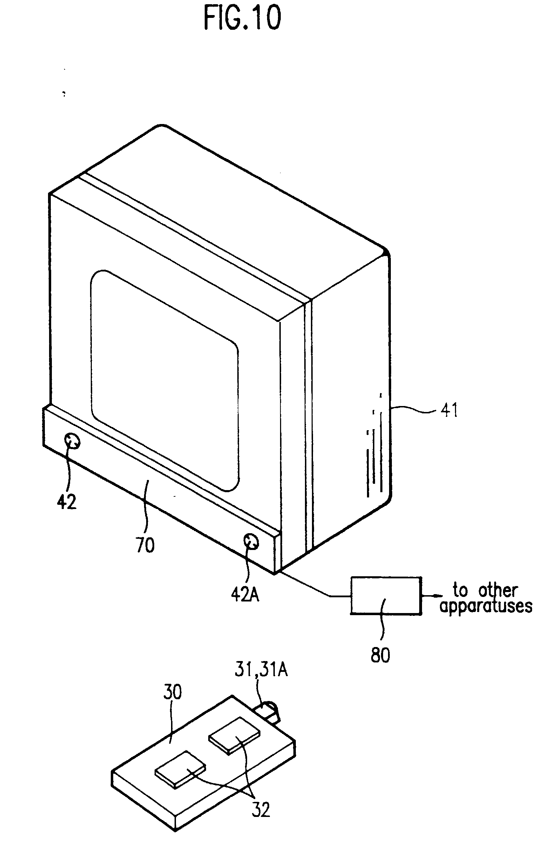

Fig. 10 illustrates an arrangement of ultrasonic wave receiving sensors on a display screen in accordance with a third embodiment of the present invention.

### DETAILED DESCRIPTION OF THE PREFERRED EMBODIMENT

Reference will now be made in detail to the preferred embodiments of the present invention, examples of which are illustrated in the accompanying drawings.

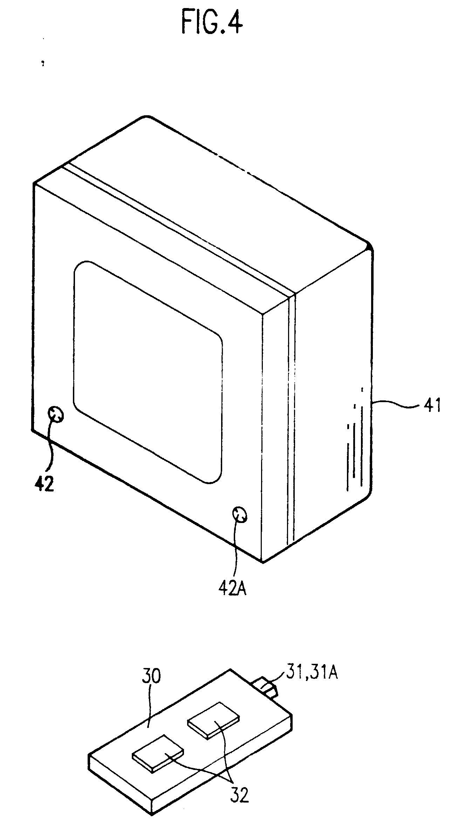

Fig. 4 illustrates a perspective view of an arrangement of an ultrasonic pointing type wireless controller in accordance with one embodiment of the present invention, wherein it is shown that ultrasonic wave receiving sensors 42 and 42A are attached at lower parts(or upper parts) of a display 41 spaced a certain distance apart from the other in an X-axis direction.

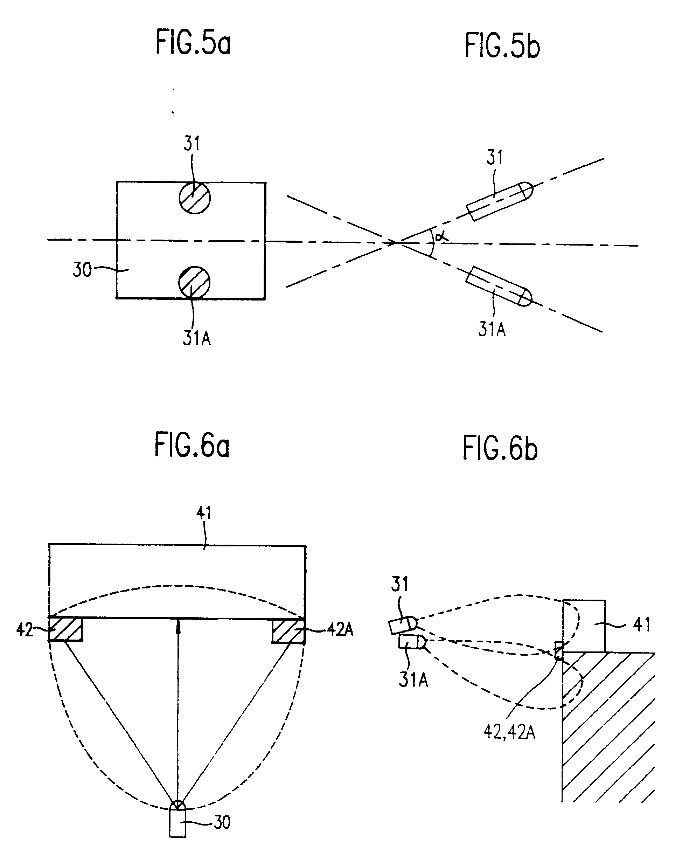

Figs. 5a and 5b illustrate front and side views respectively of an arrangement of ultrasonic wave transmitting sensors 31 and 31A shown in Fig. 4, wherein it is shown that the ultrasonic wave transmitting sensors 31 and 31A are arranged each to be at an angle α from an Y-axis on the ultrasonic wave transmitting means 30 with the directions of the axes directed by the transmitting means and the receiving means being orthogonal. The distribution of ultrasonic beams in this case is shown in Figs. 6a and 6b.

Therefore, the intensity levels of each of the ultrasonic waves transmitted from the ultrasonic wave emitting sensors 31 and 31A and received at each of the ultrasonic wave receiving sensors 42 and 42A may become to have a relative difference depending on the directions of the ultrasonic wave emitting sensors 31 and 31A in view of angles to the X-axis. By utilizing this, an X-axis coordinate can be calculated.

And, referring to Figs. 6a and 6b, the intensity level of the ultrasonic wave transmitted from the ultrasonic wave emitting sensor 31 and the intensity level of the ultrasonic wave transmitted from'the ultrasonic wave emitting sensor 31A received at each of the ultrasonic wave receiving sensors 42 and 42A become to have relative differences depending on directions of the ultrasonic wave emitting sensors 31 and 31A in view of angles to the Y-axis. By utilizing this, an Y-axis coordinate can be calculated.

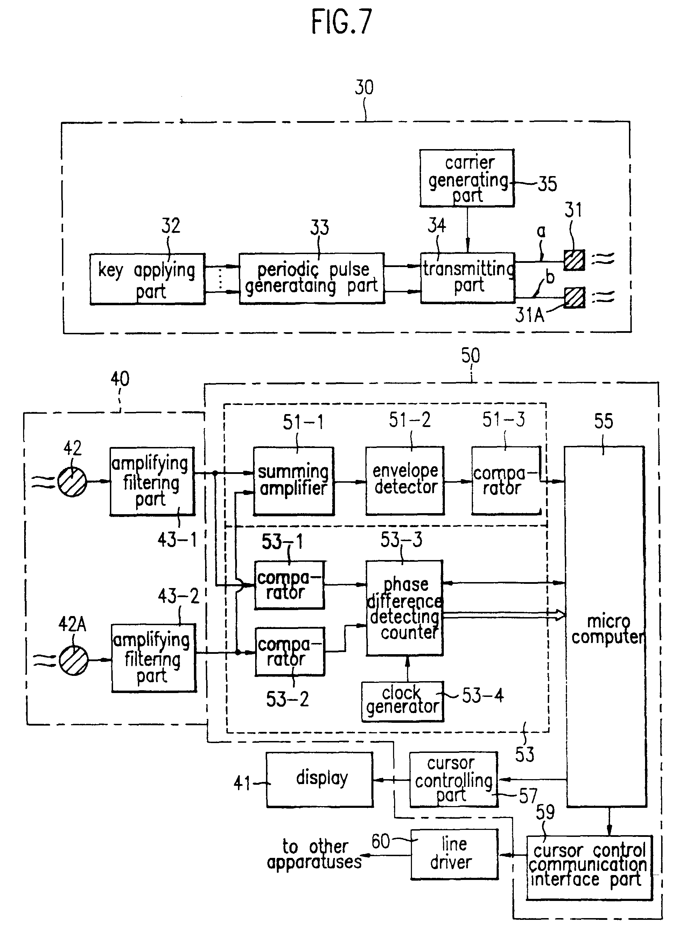

Fig. 7 illustrates a block diagram of the ultrasonic pointing type wireless controller embodying the present invention for calculating such a directed position in X- and Y-axis coordinates.

Referring to Fig. 7, the ultrasonic pointing type wireless controller includes transmitting means 30 having a plurality of ultrasonic wave emitting sensors 31 and 31A, each of which is a signal generating part, arranged to have an angle α to the Y-axis for emitting an ultrasonic signal of a predetermined frequency, receiving means 40 having ultrasonic wave receiving sensors 42 and 42A each attached on a display 41 spaced a certain distance apart from each other in an X-axis direction to be orthogonal to the ultrasonic wave emitting sensors 31 and 31A for receiving the ultrasonic waves, and controlling means 50 for calculating coordinates of a pointed position from a relative phase difference of the ultrasonic waves received at the receiving means 40.

The transmitting means 30 includes a periodic pulse generating part 33 for receiving a key signal(moving the cursor, selecting orders, operating orders and etc.) from the key applying part 32 for generating periodic pulses of code and synchronization identifying waveforms, a transmitting part 34 for converting the periodic pulse signal generated in the periodic pulse generating part 33 into an ultrasonic signal and overlapping the ultrasonic signal with a carrier signal, a carrier generating part 35 for generating the carrier signal and transmitting the carrier signal to the transmitting part 34 for preventing the ultrasonic signal from being distorted or interfered during transmission, and a plurality of ultrasonic wave emitting sensors 31 and 31A, which are signal generating parts, each for emitting an ultrasonic signal containing the carrier signal from the transmitting part 34 into the air.

The receiving means 40 includes ultrasonic wave receiving sensors 42 and 42A for receiving the ultrasonic signals transmitted from the transmitting means 30, and first and second amplifying/filtering parts 43-1 and 43-2 for amplifying the weak ultrasonic signals received at the ultrasonic wave receiving sensors 42 and 42A respectively and only passing a signal in a carrier frequency band.

The controlling means 50 includes a code identifying part 51 for identifying a code of the signal received through the receiving means 40, a coordinate calculating part 53 for converting each of the ultrasonic signals received at the receiving means 40 into a digital value, analyzing a relative phase difference of the digital value, and calculating X- and Y-axis coordinates, a microcomputer 55 for analyzing time intervals of the signals received from the code identifying part 51 for interpreting code and synchronization identifying waveforms, and generating a control signal for conducting a general process if the identified code is not an order for moving the cursor, and moving the cursor displayed on the display 41 to the calculated coordinates using the calculated coordinates in the coordinate calculating part 53 if the identified code is the order for moving the cursor, a cursor controlling part 57 for moving the cursor displayed on the display 41 to the calculated coordinates under the control of the microcomputer 55, and a cursor control communication interface part 59 for transferring the calculated coordinate values to other apparatuses under the control of the microcomputer 55.

The code identifying part 51 includes a summing amplifier 51-1 for summing and amplifying outputs from the first and second amplifying/filtering parts 43-1 and 43-2 for enabling the analyzation of time intervals of the receiving ultrasonic signals, an envelope detector 51-2 for removing the carrier signal contained in a signal received from the summing amplifier 51-1 and detecting an envelope signal, and a comparator 51-3 for comparing envelope signal from the envelope detector 51-2 to a reference signal for restoring an original digital signal.

The coordinate calculating part 53 includes a first comparator 53-1 for comparing an output from the first amplifying/filtering part 43-1 to a reference signal for converting into a digital value, a second comparator 53-2 for comparing an output from the second amplifying/filtering part 43-2 to a reference signal for converting into a digital value, a phase difference detecting counter 53-3 for converting each of the digital values from the first and second comparators 53-1 and 53-2 into a data value and transferring the data value to the microcomputer 55, and a clock generator 53-4 for generating a clock for the phase difference detecting counter 53-3.

The microcomputer analyzes a relative difference of the data from the phase difference detecting counter 53-3 and calculates coordinates of the pointed position on the display 41 at the present time.

The unexplained reference number 60 is a line driver.

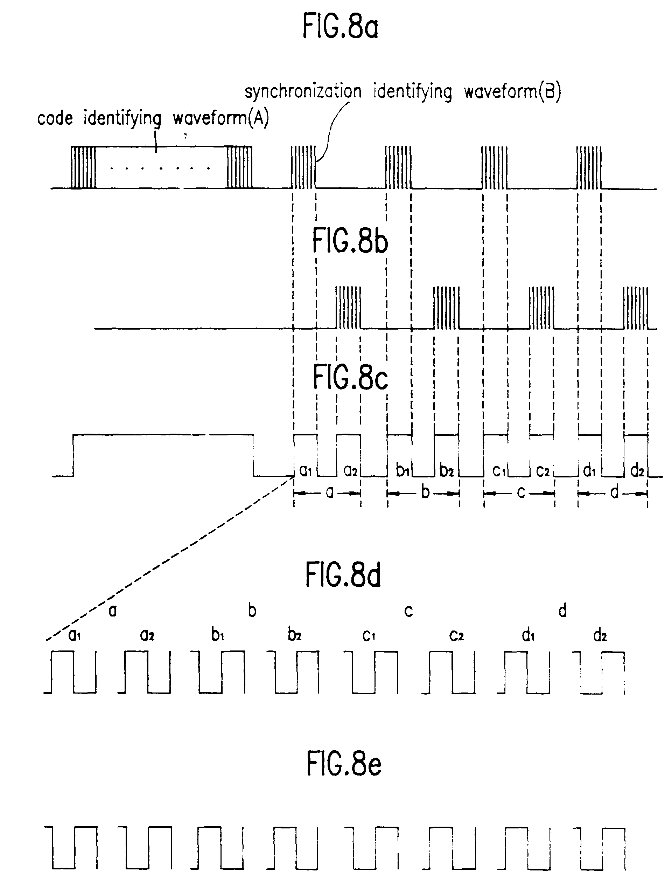

In the ultrasonic pointing type wireless controller embodying the present invention, upon reception of one of various types of key signals(for example, moving the cursor, selecting orders, operating orders and etc.) from the key applying part 32 in the receiving means 30, the periodic pulse generating part 33 generates a periodic pulses of a code identifying waveform A as shown in Fig. 8a according to the key signal, and, in addition to this, generates a synchronization identifying waveform B to a key signal for moving the cursor, and transmits these pulses to the transmitting part 34.

The transmitting part 34 overlaps the carrier signal generated in the carrier generating part 35 with the periodic pulse signal generated in the periodic pulse generating part 33 into an ultrasonic transmitting signal as shown in Figs. 8a and 8b and emits the transmitting signal into the air through the ultrasonic wave emitting sensors 31 and 31A.

Fig. 8a illustrates a signal from the ultrasonic wave emitting sensor 31 and Fig. 8b illustrates a signal from the ultrasonic wave emitting sensor 31A.

The beam distribution of the ultrasonic waves emitted into the air from the ultrasonic wave emitting sensors 31 and 31A is as shown in Fig. 6.

On the other hand, the ultrasonic wave receiving sensors 42 and 42A in the receiving means 40 attached on lower parts of the display 41 spaced a certain distance apart from the other in the X-axis direction receive the ultrasonic signals transmitted from the transmitting means 30 and applies the signals to the first and second amplifying/filtering parts 43-1 and 43-2, respectively.

In this case, the intensity levels of the ultrasonic wave from either one of the ultrasonic wave emitting sensors 31 and 31A and received at the ultrasonic wave receiving sensors 42 and 42A become to have a relative difference depending on the directions of the ultrasonic wave emitting sensors 31 and 31A with regard to angles to the X-axis. And, the intensity level of the ultrasonic wave transmitted from the ultrasonic wave emitting sensor 31 and the intensity level of the ultrasonic wave transmitted from the ultrasonic wave emitting sensor 31A become to have a relative difference depending on the directions of the ultrasonic wave emitting sensors 31 and 31A with regard to angles to the Y-axis as shown in Figs. 6a and 6b.

The first amplifying/filtering part 43-1 amplifies the ultrasonic wave received from the ultrasonic wave receiving sensor 42 and only passes the carrier frequency band, and the second amplifying/filtering part 43-2 amplifies the ultrasonic wave received from the ultrasonic wave receiving sensor 42A and only passes the carrier frequency band.

The summing amplifier 51-1 in the code identifying part 51 of the controlling means 50 sums up and amplifies outputs from the first and second amplifying/filtering part 43-1 and 43-2 and transmits to the envelope detector 51-2, and the envelope detector 51-2 removes the carrier signal contained in the received ultrasonic signal, and detects the envelope signal and transmits the envelope signal to the comparator 51-3.

The comparator 51-3 compares the envelope signal from the envelope detector 51-2 to a reference signal, converts into an original digital signal as shown in Fig. 8c from which an analyzation of time intervals is possible, and transmits to the microcomputer 55. And, the microcomputer 55 interprets code and synchronization identifying waveforms from the time intervals in the digital signal.

In the meantime, a signal from the amplifying/filtering part 43-1 is converted into a digital signal by a comparison of the signal to a reference signal in the first comparator 53-1, a signal from the amplifying/filtering part 43-2 is converted into a digital signal by a comparison of the signal to a reference signal in the second comparator 53-2, and both of them are transmitted to the phase difference detecting counter 53-3.

The phase difference detecting counter 53-3 converts each of the phase differences of the digital signals from the first and second comparators 53-1 and 53-2 into a data value as shown in Fig. 8d or 8e with reference to the clock generated in the clock generator 53-4 and applies to the microcomputer 55.

The microcomputer 55 analyzes the time intervals in the digital signal from the code identifying part 51 so that a general process is conducted if the identified code is found to be a code for an order other than moving the cursor, and the relative phase difference of the data from the coordinate calculating part 53 is analyzed to calculate X- and Y-axis coordinates and apply the coordinates to the cursor controlling part 57 if the identified code is found to be a code of an order for moving the cursor. Then the cursor controlling part 57 moves the cursor displayed on the display 41 to the calculated X- and Y- axis coordinates.

That is to say, since the intensity levels of the ultrasonic wave transmitted from either one of the ultrasonic wave emitting sensors 31 and 31A and received at the ultrasonic wave receiving sensors 42 and 42A become to have a relative difference depending on the directions of the ultrasonic wave emitting sensors 31 and 31A with regard to angles to the X-axis, the microcomputer 55, by utilizing this, calculates the X-axis coordinate. And, since the intensity level of the ultrasonic wave transmitted from the ultrasonic wave emitting sensor 31 and the intensity level of the ultrasonic wave transmitted from the ultrasonic wave emitting sensor 31A and received at the ultrasonic wave receiving sensors 42 and 42A become to have a relative difference depending on the directions of the ultrasonic wave emitting sensors 31 and 31A with regard to angles to the Y-axis as shown in Figs. 6a and 6b, the microcomputer 55, by utilizing this, calculates the Y-axis coordinate.

And, the microcomputer 55 transmits the calculated X- and Y-axis coordinate values to the cursor control communication interface part 59 to transmit the calculated X- and Y-axis coordinate values to other connected apparatuses through the line driver 60.

Herein, of the many states of direction by the transmitting means 30, if the states are classified into a case when the direction of the transmitting means 30 is fixed in the Y-axis direction while moving in a left to right direction, and a case when the direction of the transmitting means 30 is fixed in the X-axis direction while moving in a up and down direction, what is occurred in each of the cases can be as follows;
[1] In a section "a" where the Y-axis direction is fixed while moving to the left side, i.e., in a section "a" where the transmitting means 30 is directed to a center in the Y-axis direction, and moves to the left side in the X-axis direction, since the phases of the signals from the ultrasonic wave emitting sensors 31 and 31A are identical in points "a1" and "a2" as shown in Figs. 8d and 8e, it can be known that the transmitting means 30 is directed to the center in the Y-axis direction. And since, of the ultrasonic signals received at the ultrasonic wave receiving sensors 42 and 42A at the same time in Figs. 8d and 8e, a signal in Fig. 8e shows a +180 deg. phase difference compared to a signal in Fig. 8d, it can be known that the transmitting means 30 is directed to the left side in the X-axis direction.
[2] In a section "b" where the Y-axis direction is fixed while moving to the right side, i.e., in a section "b" where the transmitting means 30 is directed to a center in the Y-axis direction, and moves to the right side in the X-axis direction, since the phase in the X-axis direction is appeared in the opposite way compared to the section "a" where the transmitting means 30 is directed to a center in the Y-axis direction, and moves to the left side in the X-axis direction, it can be known that the transmitting means 30 is directed to the right side in the X-axis direction and to the center in the Y-direction.
[3] In a section "c" where the X-axis direction is fixed while moving to upward, i.e., in a section "c" where the transmitting means 30 is directed to a center in the X-axis direction, and moves to upward in the Y-axis direction, since the ultrasonic signals received at the ultrasonic wave receiving sensors 42 and 42A are identical at the same time point as shown in Figs. 8d and 8e, it can be known that the transmitting means 30 is directed to the center in the X-axis direction. And since, of the phases of the ultrasonic signals transmitted from the ultrasonic wave emitting means 31 and 31A, a phase of a signal at a time point "c2" shows a difference of +180 deg. compared to a phase of a signal at a time point "c1" as shown in Figs. 8d and 8e, it can be known that the transmitting means 30 is directed to upward in the Y-axis direction.
[4] In a section "d" where the X-axis direction is fixed while moving to downward, i.e., in a section "d" where the transmitting means 30 is directed to a center in the X-axis direction, and moves to low side in the Y-axis direction, since the phase in the Y-axis direction is appeared in the opposite way compared to the section "c" where the transmitting means 30 is directed to a center in the X-axis direction, and moves to upward in the Y-axis direction, it can be known that the transmitting means 30 is directed to low side in the Y-axis direction and to the center in the X-direction.

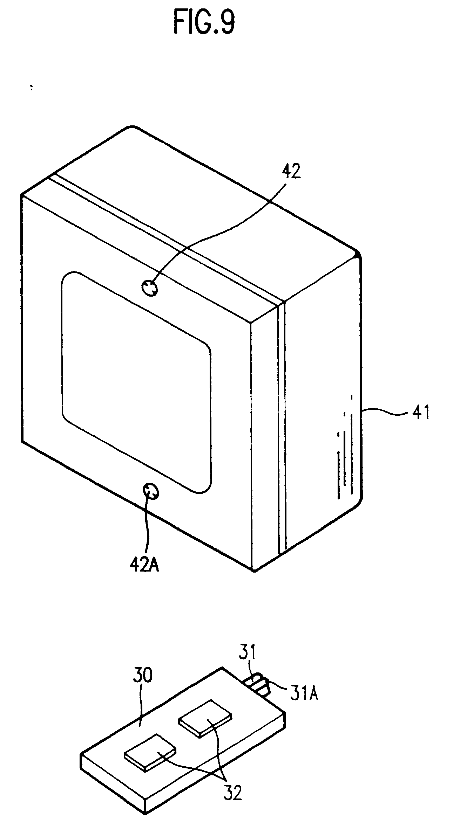

In the meantime, Fig. 9 illustrates an ultrasonic pointing type wireless controller in accordance with a second embodiment of the present invention, wherein the ultrasonic wave emitting sensors 31 and 31A are arranged on the transmitting means 30 on the X-axis each at a certain angle to the X-axis for emitting an ultrasonic wave, and the ultrasonic wave receiving sensors 42 and 42A attached on the display 41 at upper and lower parts thereof respectively spaced a certain distance apart from the other on the Y-axis, of which coordinate calculation for the pointed position is conducted in the opposite way to the one explained above.

Fig. 9 illustrates an ultrasonic pointing type wireless controller in accordance with a third embodiment of the present invention, wherein, in order to receive the transmitted ultrasonic signals, the ultrasonic wave receiving sensors 42 and 42A are, not attached on the display directly, but provided in a form of an adapter in which the ultrasonic wave receiving sensors 42 and 42A are attached on a separate sensor attaching device 70 which is in turn attached on an outside part of the display 41, and an external receiving part 80 is provided through which the system may be connected to other apparatuses.

As has been explained, by arranging the ultrasonic wave transmitting means for generating an ultrasonic wave and the ultrasonic wave receiving means for receiving the ultrasonic wave transmitted through the air orthogonal to the other for using a relative phase difference of the ultrasonic waves occurred depending on a position indicated by the transmitting means in calculating the X- and Y- axis coordinates and controlling the cursor to move to the coordinates, the ultrasonic pointing type wireless controller allows easy attachment of the ultrasonic wave sensors which widen its application as well as easy of operation in a short distance operation in which a distance between the display and the transmitter is short and long distance operation.

It will be apparent to those skilled in the art that various modifications and variations can be made in method for fabricating semiconductor device without departing from the scope of the invention. Thus, it is intended that the present invention cover the modifications and variations of this device provided they come within the scope of the appended claims and their equivalents.

## Claims

1. An ultrasonic pointing type wireless controller comprising:
transmitting means having a plurality of ultrasonic wave emitting sensors each arranged in a predetermined angle from an axis for emitting an ultrasonic signal of a fixed frequency into air;
receiving means having a plurality of ultrasonic wave receiving sensors each attached on a display orthogonal to the ultrasonic wave emitting sensors in the transmitting means for receiving the ultrasonic signals emitted from the transmitting means; and,
controlling means for calculating coordinates of a pointed position from a relative phase difference of the ultrasonic signals received at the receiving means and matching the pointed position on a screen of the display.

2. An ultrasonic pointing type wireless controller as claimed in claim 1, wherein the transmitting means includes,
a key applying part having a plurality of keys for applying orders for moving a cursor, selecting orders and operating orders and the like,
a periodic pulse generating part for receiving a key signal from the key applying part for generating periodic pulses of code and synchronization identifying waveforms,
a transmitting part for converting the periodic pulse signal generated in the periodic pulse generating part into an ultrasonic signal and overlapping the ultrasonic signal with a carrier signal,
a carrier generating part for generating the carrier signal and transmitting the carrier signal to the transmitting part, and
a plurality'of ultrasonic wave emitting sensors, which are signal generating parts, each for emitting an ultrasonic signal from the transmitting part into the air.

3. An ultrasonic pointing type wireless controller as claimed in claim 1, wherein the receiving means includes,
a plurality of ultrasonic wave receiving sensors for receiving the ultrasonic signals transmitted from the transmitting means, and
first and second amplifying/filtering parts for amplifying the ultrasonic signals received weak at the ultrasonic wave receiving sensors respectively and only passing signals in a carrier frequency band.

4. An ultrasonic pointing type wireless controller as claimed in claim 1, wherein the controlling means includes,
a code identifying part for identifying a code of the signal received through the receiving means,
a coordinate calculating part for converting each of the ultrasonic signals received at the receiving means into a digital value, and converting each of relative phase differences of the digital values into a data value,
a microcomputer for analyzing time intervals of a signal received from the code identifying part for interpreting code and synchronization identifying waveforms, and generating a control signal for conducting a general process if the identified code is an order other than the order for moving the cursor, and analyzing the relative phase difference of the data received from the coordinate calculating part for calculating X- and Y- axis coordinates if the identified code is the order for moving the cursor, and
a cursor controlling part for moving the cursor displayed on the display to the calculated coordinates under the control of the microcomputer.

5. An ultrasonic pointing type wireless controller as claimed in claim 4, wherein the controlling means further includes a cursor control communication interface part for transferring the calculated coordinate values to other apparatuses under the control of the microcomputer.

6. An ultrasonic pointing type wireless controller as claimed in claim 4, wherein the code identifying part includes,
a summing amplifier for summing and amplifying outputs from the first and second amplifying/filtering parts for enabling the analyzation of time intervals of the received ultrasonic signals,
an envelope detector for removing the carrier signal contained in a signal received from the summing amplifier and detecting an envelope signal, and
a comparator for comparing the envelope signal from the envelope detector to a reference signal for restoring an original digital signal.

7. An ultrasonic pointing type wireless controller as claimed in claim 4, wherein the coordinate calculating part includes,
a first comparator for comparing an output from the first amplifying/filtering part to a reference signal for converting the output into a digital value,
a second comparator for comparing an output from the second amplifying/filtering part to a reference signal for converting the output into a digital value,
a phase difference detecting counter for converting each of the digital values from the first and second comparators into a data value and transferring the data value to the microcomputer, and
a clock generator for generating a clock for the phase difference detecting counter.

8. An ultrasonic pointing type wireless controller as claimed in claim 1, wherein each of the plurality of ultrasonic wave emitting sensors are arranged at a predetermined angle α from an Y-axis direction, and each of the plurality of ultrasonic wave receiving sensors are attached on the display spaced a predetermined distance apart in an X-axis direction orthogonal to the ultrasonic wave emitting sensors in the transmitting means.

9. An ultrasonic pointing type wireless controller as claimed in claim 1, wherein each of the plurality of ultrasonic wave emitting sensors are arranged at a predetermined angle from an X-axis direction, and each of the plurality of ultrasonic wave receiving sensors are attached on the display spaced a predetermined distance apart in an Y-axis direction orthogonal to the ultrasonic wave emitting sensors in the transmitting means.

10. An ultrasonic pointing type wireless controller as claimed in claim 1, wherein the receiving means and the controlling means are detachably provided to the display.
